# FASCICULE DE BREVET EUROPEEN

(11) **EP 0 816 174 B1**
(45) Date de publication et mention de la délivrance du brevet: **19.07.2000**
(21) Numéro de dépôt: 97401176.9
(22) Date de dépôt: 28.05.1997
(51) Int. Cl.: B60R 13/02

(54) **Panneau d'étanchéité pour portières d'automobiles**
Dichtungsverkleidung für Kraftfahrzeugtüren
Sealing panel for vehicle doors

(30) Priorité: 14.06.1996 FR 9607428; 16.10.1996 FR 9612626
(43) Date de publication de la demande: 07.01.1998
(73) Titulaire: PLASTO S.A., 21300 Chenôve (FR)
(72) Inventeur: Fumey, Franck, 21000 Dijon (FR); Nicole, Brigitte, 21240 Talant (FR)
(74) Mandataire: Levy, David

(56) Documents cités:
- DE-A- 2 220 668
- DE-A- 2 360 761
- DE-U- 7 804 040
- DE-U- 8 508 291
- DE-U- 9 415 588
- US-A- 5 322 722
- PATENT ABSTRACTS OF JAPAN vol. 7, no. 7 (C-144), 12 janvier 1983 & JP 57 164135 A (SHOWA DENKO KK), 8 octobre 1982,

## Description

La présente invention concerne les panneaux d'étanchéité placés à l'intérieur des portières automobiles.

Dans la fabrication des automobiles, il est nécessaire d'assurer l'étanchéité à l'intérieur des portières de façon à supprimer les infiltrations de l'eau susceptible de s'introduire par le passage des vitres. De plus, les portières de voiture sont équipées maintenant de dispositifs électriques tels que les lève-glaces électriques, les serrures électriques, les haut-parleurs qu'il est impératif de protéger de l'humidité si l'on souhaite une bonne fiabilité. De ce fait, il est connu de placer à l'intérieur de la portière une paroi qui sépare une zone humide extérieure et une zone sèche côté intérieur du véhicule. Pour réaliser cette paroi d'étanchéité, appelée couramment garniture d'étanchéité, on fait appel à des films ou des feuilles de mousse étanches que l'on fixe au moyen d'agrafes ou d'un adhésif placé sur le pourtour de la paroi de séparation. Parmi les matériaux connus utilisés dans cette application, on peut citer les films en polyéthylène ou en polypropylène, les mousses de polyéthylène réticulé, des complexes en mousse de polyéthylène non réticulé associée à un film en polyéthylène, ou encore des associations de mousse polyéthylène et de mousse polyuréthanne. En raison des formes complexes et des accessoires présents à l'intérieur de la portière, il est de plus en plus difficile d'utiliser des films plans et il est alors nécessaire de faire appel à des panneaux déterminant des cavités et des volumes qui s'adaptent mieux aux contours des différents équipements présents dans le volume de la portière. On utilise alors généralement des panneaux thermoformés qui sont obtenus à partir d'un film ou d'une feuille de matériau alvéolaire.

Si les films sont moins coûteux, on préfère cependant les panneaux obtenus à partir d'une feuille de matériau alvéolaire, généralement une mousse de polyéthylène réticulée, qui présente l'avantage de procurer une meilleure isolation thermique et phonique ainsi qu'une plus grande rigidité que les films.

Un panneau d'étanchéité ayant les caractéristiques du préambule de la revendication 1 est décrit dans le document DE-U-8 508 291.

### Objet de l'invention

La présente invention a pour objet de fournir un nouveau panneau d'étanchéité auto-adhésif pour les portières d'automobiles dans lequel le support est en une matière thermoformable et translucide, l'adhésif sensible à la pression étant alors visible au travers du support. Selon l'invention, la matière alvéolaire pour la fabrication du panneau est une mousse de polypropylène non réticulée qui est translucide et qui peut être thermoformée de façon à s'adapter parfaitement aux espaces définis par la structure de la portière.

L'adhésif sensible à la pression est constitué par un cordon moussé.

L'adhésif sensible à la pression est de préférence un adhésif de type hot-melt, mais il est également possible d'utiliser un adhésif déposé par sérigraphie.

De façon pratique, un adhésif déposé sous forme de cordon pourra être visible au travers du panneau avec un très faible ajout de colorant (ou même simplement du fait de sa couleur naturelle) alors qu'un adhésif déposé en couche mince par exemple par sérigraphie devra être formulé avec des charges colorées.

Ce nouveau panneau d'étanchéité présente l'avantage d'être translucide alors que les panneaux réalisés en mousse de polyéthylène réticulé sont opaques. Cette propriété permet une mise en place plus précise car il devient possible de contrôler le positionnement du panneau par rapport à la structure de la portière et s'assurer d'une fixation correcte de la partie adhésive. Un second avantage de l'invention est apporté par l'utilisation d'un cordon d'adhésif sensible à la pression de type hot-melt : le dépôt à haute température du cordon de colle provoque un accrochage extrêmement solide entre le matériau alvéolaire et l'adhésif.

### Description détaillée

Pour réaliser l'invention, on utilise de préférence une feuille de mousse de polypropylène non réticulé. Parmi les types de mousse de polypropylène, on choisit des mousses possédant un taux de cellules fermées supérieur à 80 %, de densité comprise entre 25 et 150 kg/m³ obtenu par extrusion sous forme de feuilles dont les surfaces ont l'aspect d'une peau sensiblement imperméable.

De préférence, la mousse de polypropylène utilisée contient des additifs qui lui confèrent une résistance au feu compatible avec les normes d'utilisation dans les automobiles, et ne contient pas de colorants pour garder un aspect translucide. La mousse se présente sous forme d'une feuille dont l'épaisseur est comprise entre 1,5 et 6 mm, de préférence 1,5 à 3 mm. Le choix d'une feuille de mousse de polypropylène comprenant au moins 80 % de cellules fermées est important car il permet d'assurer l'étanchéité indispensable au panneau.

Il est également possible d'associer à la feuille de mousse de polypropylène, un film, également en polypropylène, fixé sur la feuille de mousse par thermofusion, par flammage ou au moyen d'un adhésif. On utilise alors un film de polypropylène transparent ou translucide, d'épaisseur comprise entre 15 et 150 µm, qui est de préférence ignifugé. Cet assemblage conserve le caractère translucide et thermoformable et permet d'obtenir un panneau qui est plus résistant à la déchirure et qui est doté d'une face très lisse convenant mieux pour être adhésivée par sérigraphie.

Les panneaux d'étanchéité sont généralement adhésivés au moins sur leur périphérie soit par un cordon adhésif, soit par une couche de masse adhésive déposée par sérigraphie. Dans le cas où le panneau est constitué d'un complexe associant la couche de mousse polypropylène à un film en polypropylène, la matière adhésive sous forme de cordon est déposée de préférence sur la face libre de la feuille de mousse, alors que la matière adhésive en couche mince sérigraphiée est déposée de préférence sur la face libre du film polypropylène. De tels panneaux, adhésivés sur l'une de leurs faces, peuvent être traités sur la seconde face au moyen d'un vernis anti-adhérant, par exemple à base de silicones ; ce traitement permet de stocker les panneaux sous forme d'une pile sans protecteur pelable, chaque face adhésive d'un panneau étant, pendant le stockage, en appui sur la face anti-adhérante du panneau suivant.

Le thermoformage de la feuille d'étanchéité est réalisé suivant les techniques connues de l'homme de l'art, par chauffage de la feuille au moyen de rayonnement infrarouge sectoriel ou d'air chaud, ou par contact, puis formage sur un moule négatif ou positif muni d'orifices à dépression. Après refroidissement, le panneau est découpé aux dimensions adaptées puis on dépose sur tout le pourtour du panneau et, si nécessaire, autour des orifices découpés dans le panneau, un cordon d'adhésif sensible à la pression de type hot-melt.

De préférence, le cordon de colle est moussé à l'aide d'un gaz neutre afin d'obtenir un cordon plus souple et plus conformable. On utilise un adhésif de type hot-melt qui peut être déposé à l'état fondu à une température comprise entre 160 et 200 °C : on forme ainsi pratiquement une thermosoudure entre la feuille de mousse de polypropylène et le cordon de colle, ce qui permet d'obtenir un excellent accrochage entre le film et le cordon adhésif. Dans le but de faciliter la mise en place du panneau d'étanchéité sur la structure de la portière, on ajoute, si nécessaire un colorant dans la masse adhésive afin de distinguer le cordon de colle au travers de la feuille de mousse de polypropylène translucide.

La masse adhésive de type hot-melt est obtenue par mélange d'un élastomère de synthèse de type tri-bloc S.I.S, d'une résine de type aliphatique ou terpénique, d'un plastifiant à base d'huile aliphatique ou paraffinique, de stabilisants antioxydants ou anti-uv et éventuellement de colorants.

Après le dépôt du cordon de colle, qui est généralement réalisé de façon automatique à l'aide d'un robot, on place sur le cordon adhésif des protecteurs en papier siliconé afin de permettre le stockage avant l'utilisation, dans le cas des panneaux non traités anti-adhérants sur leur seconde face.

L'utilisation des panneaux d'étanchéité selon l'invention en mousse de polypropylène associée à un cordon de colle hot-melt conduit à une amélioration de la productivité en raison de la facilité de pose et à une amélioration de la qualité en raison de la possibilité de contrôler la continuité de la fixation entre le panneau et la structure de la portière.

Les exemples de réalisation suivants permettent de mieux comprendre l'objet de l'invention.

Pour réaliser un panneau d'étanchéité de la portière d'une automobile, on utilise une feuille en mousse de polypropylène à cellules fermées d'épaisseur 2,5 mm et de densité 35 kg/m³ que l'on thermoforme par dépression sur un moule négatif après chauffage pendant 20 à 25 secondes au moyen d'un dispositif à radiants infrarouge sectoriels.

En fin de chauffage, la température de la matière est d'environ 100 à 130 °C. Le moule, dont la forme est déterminée en fonction de la structure de portière, présente des reliefs dont les formes les plus prononcées correspondent à des valeurs h/d (hauteur/diamètre) sensiblement égales à 1. Après refroidissement au contact du moule, la pièce est découpée puis on dépose, au moyen d'un robot, un cordon de colle hot-melt.

La masse adhésive est obtenue par malaxage à 160°C d'un mélange formé de 100 parts d'un élastomère de synthèse de type S.I.S (commercialisé sous la marque CARIFLEX TR1107 par la société SHELL), 40 parts d'une huile de type paraffinique (commercialisée sous la référence CATENEX N956 par la société SHELL), 150 parts de résine de type aliphatique (commercialisée sous la marque WINGTACK 95 par la société GOOD-YEAR), 2,5 parts d'antioxydant phénolique (commercialisé sous la référence IRGANOX 1010 par la société CIBA-GEIGY) et 0,3 parts d'un colorant bleu (commercialisé sous la référence NOVAPINT UV50). Le cordon de colle est déposé à l'aide d'un robot sous forme moussé, à une température d'environ 170-175 °C et à raison de 4 à 8 g/m linéaire, puis recouvert par des bandes de papier siliconé protecteur.

Selon un second exemple de réalisation, on utilise un complexe formé d'une feuille de mousse de polypropylène de densité 35 kg/m³ à cellules fermées, d'épaisseur 1,5 mm (fourni par la société PSG-SENTINEL), complexé par calandrage à chaud avec un film polypropylène ignifugé (d'origine FLEXAFILM) d'épaisseur 105 µm. Le complexe laminé est enduit sur la face libre du film d'un vernis anti-adhérent à base de silicone, puis thermoformé et découpé en fonction des impératifs de structure de la portière. On dépose ensuite un cordon de colle hot-melt sur le pourtour de la face mousse du panneau de façon analogue à l'exemple précédent. Après refroidissement du cordon, les panneaux ainsi obtenus peuvent être stockés sous forme d'une pile, sans protecteur, puis utilisés dans les ateliers de montage avec encore plus de facilité que l'exemple précédent puisqu'il n'est plus nécessaire de retirer de papier protecteur avant mise en place.

Lors de la mise en place, l'aspect translucide de la mousse de polypropylène permet une meilleure précision dans le positionnement de la feuille d'étanchéité et un contrôle de l'écrasement du cordon adhésif sur tout le pourtour du panneau.

Ainsi, en utilisant un panneau d'étanchéité selon l'invention, le préposé peut parfaitement vérifier la position du panneau puis la continuité du collage sur tout le pourtour de la feuille en surveillant l'écrasement régulier du cordon de colle.

## Revendications

1. Panneau d'étanchéité auto-adhésif, du type comprenant un support sur une face duquel est appliqué un adhésif sensible à la pression, caractérisé en ce que le support est en une matière alvéolaire thermoformable et translucide, en mousse de polypropylène non réticulée et en ce que l'adhésif sensible à la pression est constitué par un cordon moussé visible par transparence à travers ledit support.

2. Panneau d'étanchéité auto-adhésif selon la revendication 1, caractérisé en ce que la mousse de polypropylène non réticulée comprend un taux de cellules fermées d'au moins 80 %.

3. Panneau d'étanchéité auto-adhésif selon la revendication 1, caractérisé en ce que la matière alvéolaire présente une épaisseur comprise entre 1,5 et 6 mm, de préférence 1,5 à 3 mm.

4. Panneau d'étanchéité auto-adhésif selon l'une des revendications 1 ou 3, caractérisé en ce que la matière alvéolaire est traitée anti-feu.

5. Panneau d'étanchéité auto-adhésif selon l'une quelconque des revendications 1, 3 ou 4, caractérisé en ce que la matière alvéolaire est laminée à chaud ou collée à un film en polypropylène thermoformable et translucide.

6. Panneau d'étanchéité auto-adhésif selon l'une quelconque des revendications 1 à 5, caractérisé en ce que la face non adhésive du support est traitée anti-adhérente.

7. Panneau d'étanchéité auto-adhésif selon la revendication 1, caractérisé en ce que le cordon moussé est déposé à une température comprise entre 160 et 200°C.

8. Panneau d'étanchéité selon l'une quelconque des revendications 1 à 7, caractérisé en ce que l'adhésif contient un colorant.

9. Utilisation du panneau d'étanchéité selon l'une quelconque des revendications 1 à 8 pour assurer l'étanchéité des portières des véhicules.

## Patentansprüche

1. Selbstklebende Dichtungsverkleidung mit einem Träger, der auf einer Seite einen selbstklebenden Klebstoff aufweist, dadurch gekennzeichnet, daß der Träger aus einem durchsichtigen, wärmeformbaren, wabenförmigen, unvernetzten Polypropylenschaumstoffmaterial besteht und daß der selbstklebende Klebstoff aus einem geschäumten Streifen gebildet ist, der durch den Träger durchscheinent.

2. Selbstklebende Dichtungsverkleidung gemäß Anspruch 1, dadurch gekennzeichnet, daß der unvernetzte Polypropylenschaumstoff ein Verhältnis von geschlossenen Zellen von mindestens 80% umfaßt.

3. Selbstklebende Dichtungsverkleidung gemäß Anspruch 1, dadurch gekennzeichnet, daß das wabenförmige Material eine Dicke zwischen 1,5 und 6 mm, vorzugsweise 1,5 bis 3 mm, hat.

4. Selbstklebende Dichtungsverkleidung gemäß Anspruch 1 oder 3, dadurch gekennzeichnet, daß das wabenförmige Material feuerfest gemacht wurde.

5. Selbstklebende Dichtungsverkleidung gemäß Anspruch 1, 3 oder 4, dadurch gekennzeichnet, daß das wabenförmige Material auf einen durchsichtigen und wärmeformbaren Polypropylenfilm warmgewalzt oder aufgeklebt wird.

6. Selbstklebende Dichtungsverkleidung gemäß einem der Ansprüche 1 bis 5, dadurch gekennzeichnet, daß die nichtklebende Seite des Trägers antiadhäsiv gemacht wurde.

7. Selbstklebende Dichtungsverkleidung gemäß Anspruch 1, dadurch gekennzeichnet, daß der geschäumte Streifen bei einer Temperatur zwischen 160 und 200°C aufgetragen wird.

8. Selbstklebende Dichtungsverkleidung gemäß einem der Ansprüche 1 bis 7, dadurch gekennzeichnet, daß der Klebstoff Farbstoff enthält.

9. Verwendung der selbstklebenden Dichtungsverkleidung gemäß einem der Ansprüche 1 bis 8 zur Abdichtung von Fahrzeugtüren.

## Claims

1. A self-adhesive sealing panel of the type comprising a support onto one face of which a pressure-sensitive adhesive is applied, characterized in that the support consists of a translucent cellular thermoforming material, consisting of non-cross-linked polypropylene foam, and in that the pressure-sensitive adhesive is a foamed cord visible by transparency through said support.

2. A self-adhesive sealing panel according to claim 1, characterized by the fact that said non-cross-linked polypropylene foam has a content of closed cells of at least 80%.

3. A self-adhesive sealing panel according to claim 1, characterized by the fact that the cellular material has a thickness of between 1.5 and 6 mm, and preferably 1.3 and 3 mm.

4. A self-adhesive sealing panel according to any of claims 1, to 3, characterized by the fact that the cellular material is subjected to a fireproofing treatment.

5. A self-adhesive sealing panel according to any of claims 1, 3 or 4, characterized by the fact that the cellular material is hot-laminated or glued to a translucent thermoformable polypropylene film.

6. A self-adhesive sealing panel according to any of claims 1, to 5, characterized by the fact that the non-adhesive face is subjected to an anti-adherent treatment.

7. A self-adhesive sealing panel according to claim 1, characterized by the fact that the foamed cord is deposited at a temperature of between 160 and 200°C.

8. A self-adhesive sealing panel according to any of claims 1, to 7. characterized by the fact that the adhesive contains a colorant.

9. Use of the sealing panel according to any of claims 1, to 8 to assure the tightness of the doors of vehicles.
